# FASCICULE DE BREVET EUROPEEN

(11) **EP 3 737 602 B1**
(45) Date de publication et mention de la délivrance du brevet: **05.03.2025**
(21) Numéro de dépôt: 19703149.5
(22) Date de dépôt: 07.01.2019
(51) Int. Cl.: B62D 25/02, B62D 29/00, B62D 21/15

(54) **VEHICULE PRESENTANT UNE PIECE DE RENFORT EN SOUTIEN D'UN PANNEAU DE CARROSSERIE**
FAHRZEUG MIT EINEM EIN BLECHTEIL UNTERSTÜTZENDEN VERSTÄRKUNGSELEMENT.
VEHICLE HAVING A REINFORCING PART SUPPORTING A BODY PANEL

(30) Priorité: 11.01.2018 FR 1850223
(43) Date de publication de la demande: 18.11.2020
(73) Titulaire: Stellantis Auto SAS, 78300 Poissy (FR)
(72) Inventeur: LEFEVRE, Eric, 91470 LIMOURS (FR); ROBERT, Cédric, 70400 HERICOURT (FR)
(74) Mandataire: BCIP
(86) Numéro de dépôt international: PCT/FR2019/050020
(87) Numéro de publication internationale: WO 2019/138177

(56) Documents cités:
- WO-A1-2016/176459
- GB-A- 2 375 328
- US-A- 6 092 864

## Description

La présente invention s'adresse aux véhicules de type automobiles dotés d'une porte latérale coulissante.

Certains véhicules automobiles sont équipés d'au moins une porte latérale coulissante déplaçable entre une position de fermeture appliquée contre la carrosserie du véhicule et une position d'ouverture dans laquelle la porte dégage une ouverture latérale donnant sur l'habitacle du véhicule ou sur un espace de chargement.

Pour cela, le panneau de la porte coulissante est doté de chariots de guidage circulant dans des rails fixés sur la carrosserie du véhicule. Dans la position de fermeture, la surface extérieure de la porte est alignée dans la continuité de l'ensemble de la carrosserie, mais elle est écartée de ladite carrosserie en position d'ouverture grâce à l'emploi d'un dispositif d'écartement. Les rails de guidage comprennent, entre autres, un rail inférieur généralement associé au longeron de bas de caisse du châssis du véhicule automobile.

Pour assurer l'alignement correct en position de fermeture de la porte, le rail inférieur dans la région correspondant à la fin de la fermeture de la porte, comporte une portion recourbée vers l'intérieur du véhicule dont la déviation dépend de la distance d'écartement compatible avec les déplacements de la porte. Un exemple d'une telle porte coulissante latérale est donné par le document EP1745958.

L'un des problèmes rencontrés par cette configuration est qu'elle génère une ouverture sur l'habitacle à l'endroit où le rail inférieur présente sa portion recourbée entrant dans l'habitacle du véhicule. Cette ouverture est située à proximité du corps creux formé par le renfort de longeron et le côté de caisse. Il a été constaté que certains utilisateurs avaient tendance à insérer leur pied dans cette ouverture et à s'y appuyer de tout leur poids. Ceci génère des craquements de tôle au niveau dudit corps creux qui sont nuisibles à la qualité du véhicule telle que perçue par l'utilisateur. Par ailleurs, cet appui peut engendrer un enfoncement, même temporaire, d'une portion du panneau de côté de caisse, ce qui peut générer ou agrandir un jeu entre ledit renfort de longeron et ledit côté de caisse. Un tel jeu est alors susceptible de laisser pénétrer des gravillons ou autres objets solides à l'intérieur de ce corps creux, ce qui est également nuisible à la qualité perçue du véhicule. Il y a donc un besoin d'une solution pour remédier aux inconvénients mentionnés et améliorer la qualité perçue du véhicule au niveau de cette ouverture.

Le document WO 2016/176459 A1 divulgue des éléments de renfort et d'étanchéité appliqués à des pièces automobiles incluant une mousse expansive.

L'invention a pour objectif de répondre aux problèmes rencontrés par l'art antérieur en proposant de disposer dans le corps creux un élément de renfort configuré pour assurer l'étanchéité dudit corps creux tout en soutenant le panneau de côté de caisse au niveau de la zone d'appui du pied de l'utilisateur.

A cet effet, et selon un premier aspect, l'invention a pour objet un véhicule automobile comprenant un panneau de carrosserie et un élément de structure, l'élément de structure et le panneau de carrosserie étant configurés pour former un corps creux montrant une paroi supérieure, ladite paroi supérieure étant formée par une partie recourbée dudit panneau de carrosserie ; le véhicule est remarquable en ce qu'il comprend en outre au moins une pièce de renfort fixée sur l'élément de structure dans ledit corps creux, ladite ou lesdites pièces de renfort comprenant une embase présentant un corps, des moyens de fixation, et un élément de support configuré pour s'étendre depuis ladite embase sous la paroi supérieure dudit corps creux, et en ce que ladite pièce de renfort est un insert gonflant, de sorte à ce que les moyens de fixation comprennent une mousse expansive. Le véhicule comprend un habitacle, une porte latérale coulissante dotée d'un rail inférieur présentant une portion courbée vers l'intérieur de l'habitacle et une ouverture formant un passage pour ledit rail en direction de l'habitacle. L'élément de structure est un renfort de longeron et le panneau de carrosserie est un panneau de côté de caisse. La paroi supérieure du corps creux est disposée sous l'ouverture destinée à permettre à la portion recourbée d'un rail de guidage inférieur d'une porte coulissante de pénétrer dans l'habitacle.

Comme on l'aura compris à la lecture de la définition qui vient d'en être donnée, l'invention propose d'ajouter une pièce de renfort dans le corps creux sous sa paroi supérieure, par exemple au niveau d'une ouverture. Lorsque l'ouverture en question est destinée à permettre à la portion recourbée du rail de guidage inférieur de pénétrer dans l'habitacle, la pièce de renfort est fixée sur le renfort de longeron et présente un élément de support, s'étendant en porte-à-faux sous le panneau de carrosserie (i.e. le panneau de côté de caisse). Ainsi, lorsque l'utilisateur du véhicule appuie sur la paroi supérieure du corps creux, du fait de l'insertion de son pied dans l'ouverture destinée au rail de guidage, la portion du panneau de carrosserie enfoncée se place en appui contre l'élément de support de la pièce de renfort. L'enfoncement de la portion de panneau de carrosserie est donc limité ce qui réduit les risques d'émissions de bruits, tels que des craquements de tôle, et limite également l'apparition ou l'élargissement d'un jeu entre l'élément de structure et le panneau de carrosserie formant le corps creux.

Selon une mise en œuvre préférée de l'invention, l'élément de structure est un renfort de longeron et le panneau de carrosserie est un panneau de côté de caisse. De préférence, le corps creux est disposé sous une ouverture qui est, quant-à-elle, destinée à permettre à la portion recourbée d'un rail de guidage inférieur d'une porte coulissante de pénétrer dans l'habitacle.

Aussi, l'invention a préférentiellement pour objet un véhicule automobile comprenant un habitacle, une porte latérale coulissante dotée d'un rail inférieur présentant une portion courbée vers l'intérieur de l'habitacle et une ouverture formant un passage pour ledit rail en direction de l'habitacle, ledit véhicule comprenant en outre au moins un renfort de longeron et au moins un panneau côté de caisse définissant un corps creux agencé sous ladite ouverture, le véhicule étant remarquable en ce qu'il comprend en outre au moins une pièce de renfort fixée sur le renfort de longeron dans ledit corps creux, ladite ou lesdites pièces de renfort comprenant une embase présentant un corps, des moyens de fixation, et un élément de support configuré pour s'étendre depuis ladite embase sous la paroi supérieure dudit corps creux, et en ce que ladite pièce de renfort est insert gonflant, de sorte à ce que les moyens de fixation comprennent une mousse expansive.

Selon un mode de réalisation préféré de l'invention, la mousse expansive est agencée pour être disposée entre ladite embase et l'élément de structure, et/ou entre ladite embase et le panneau de carrosserie. Préférentiellement, la mousse expansive est agencée pour être en contact à la fois avec l'élément de structure et avec le panneau de carrosserie. L'utilisation d'une mousse expansive dans cette ou ces zones est avantageuse pour sa double fonction d'élément d'étanchéité et de complément de fixation de la pièce.

Avantageusement, l'embase présente une nervure longitudinale supérieure s'étendant verticalement, et de la mousse expansive est portée par l'arête supérieure de ladite nervure de telle sorte à assurer une liaison avec ledit panneau de carrosserie. Cette configuration est particulièrement avantageuse pour éviter la formation ou l'agrandissement d'un jeu entre l'élément de structure et le panneau de carrosserie.

Selon un autre mode de réalisation préféré de l'invention complémentaire ou alternatif, les moyens de fixation d'au moins une pièce de renfort comprennent au moins une patte de fixation. De préférence, de la mousse expansive est portée par la face de la ou des pattes de fixation disposées en regard de l'élément de structure, de telle sorte à assurer une liaison avec ledit élément de structure.

Selon une variante préférée de l'invention, les moyens de fixation d'au moins une pièce de renfort comprennent au moins un clip de fixation. De préférence les moyens de fixation de ladite pièce de renfort comprennent au moins une patte de fixation, et au moins un clip de fixation est porté par une patte de fixation. La fixation de la pièce de renfort à l'élément de structure par clippage est avantageuse par la facilité de montage de la pièce qu'elle procure, ce qui diminue son coût d'implantation dans le véhicule.

De manière préférentielle, au moins une pièce de renfort comprend au moins une nervure de rigidification formant une équerre reliant l'embase à l'élément de support, de préférence les moyens de fixation comprennent au moins une patte de fixation, et au moins une nervure est associée à au moins une patte de fixation. L'équerrage de l'élément de support permet d'augmenter sa rigidité et de diminuer les risques de pliage de la pièce sous l'effort.

De manière optionnelle, au moins une pièce de renfort est asymétrique selon un plan vertical médian et comprend des moyens de détrompage, de préférence ladite pièce de renfort comprend au moins deux pattes de fixation et lesdits moyens de détrompage se présentent sous forme d'au moins deux pattes de fixation de longueur différente.

Selon un mode de réalisation préféré, au moins une pièce de renfort est réalisée en matériau composite, ledit matériau composite comprenant une matrice en résine thermoplastique ou en résine thermodurcissable et un renfort en fibres, de préférence le renfort en fibres comprend des fibres de verre et/ou la matrice est sélectionnée dans le groupe comprenant les résines polypropylènes, polyamides, polyphtalamides, polyétheréthercétones, polysulfures de phénylène, polyamides-imide, polyétherimides, polyarylamides, polyépoxydes, polyesters insaturés, vinylesters et polyesters-vinylester. De préférence encore, la matrice est une résine polyamide.

L'invention sera bien comprise et d'autres aspects et avantages apparaîtront clairement à la lecture de la description qui suit donnée en référence aux planches de dessins annexées sur lesquelles :
- la figure 1 est une vue du véhicule montrant l'ouverture destinée à permettre à la portion recourbée du rail de guidage inférieur de pénétrer dans l'habitacle, avec le panneau de côté de caisse.
- La figure 2 est une vue similaire sur laquelle le panneau de côté de caisse a été retiré laissant apparaître la pièce de renfort selon l'invention.
- Les figures 3 et 4 sont des vues montrant des exemples de pièces de renfort.
- La figure 5 est une vue montrant une coupe de la caisse du véhicule montrant le positionnement de la pièce de renfort par rapport au renfort de longeron et au panneau de côté de caisse.

Dans la description qui suit, le terme « comprendre » est synonyme de « inclure » et n'est pas limitatif en ce qu'il autorise la présence d'autres éléments dans la pièce de renfort ou le véhicule auquel il se rapporte. Il est entendu que le terme « comprendre » inclut les termes « consister en ». Les termes « inférieur », « supérieur », « avant » et « arrière » s'entendront par rapport à l'orientation générale du véhicule. « Inférieur » désignera une proximité au sol plus importante que « supérieur » selon l'axe vertical. Sur les différentes figures, les mêmes références désignent des éléments identiques ou similaires.

L'invention sera décrite en relation avec une de ses mises en œuvre préférées, à savoir un véhicule comprenant un habitacle, une porte latérale coulissante dotée d'un rail inférieur présentant une portion courbée vers l'intérieur de l'habitacle et une ouverture formant un passage pour ledit rail en direction de l'habitacle. Dans cette mise en œuvre préférée, l'élément de structure est un renfort de longeron et le panneau de carrosserie est un panneau de côté de caisse, de préférence l'ouverture est destinée à permettre à la portion recourbée d'un rail de guidage inférieur d'une porte coulissante de pénétrer dans l'habitacle. L'homme du métier appliquera néanmoins sans peine l'invention à d'autres corps creux formés par un élément de structure et un panneau de carrosserie, lorsque ledit corps creux est disposé sous une ouverture, et lorsqu'il est possible qu'un appui important soit effectué sur la partie supérieure dudit corps creux.

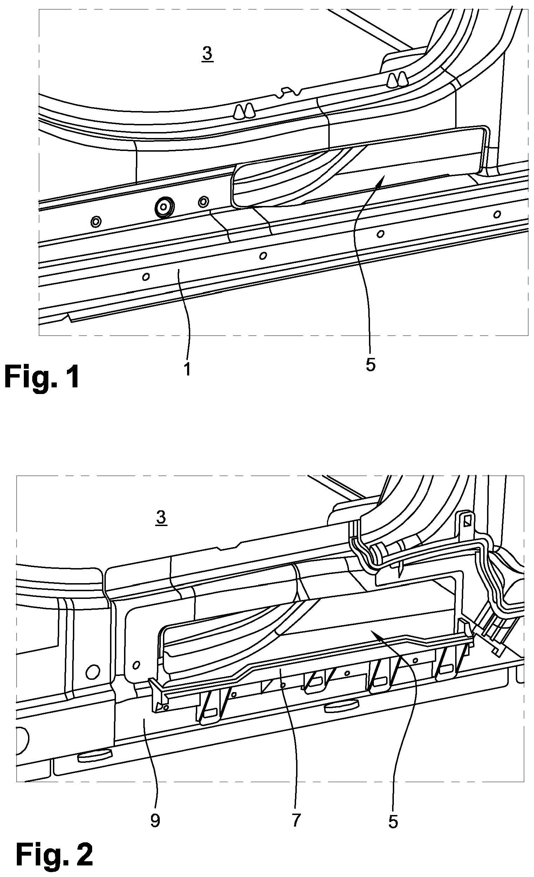

On se réfèrera en premier lieu à la figure 1. Sur cette figure, on peut voir en partie le panneau de côté de caisse 1 monté sur la structure du véhicule. Ce panneau présente une ouverture 3 destinée à être fermée par la porte coulissante latérale du véhicule (non représentée) et une ouverture 5 destinée à permettre le passage de la portion recourbée du rail inférieur de guidage de la porte coulissante dans l'habitacle du véhicule. On peut voir qu'une portion du panneau de caisse 1 s'étend sensiblement horizontalement en partie inférieure de l'ouverture 5 pour le rail inférieur de guidage. C'est cette zone sur laquelle l'utilisateur va appuyer avec son pied lorsqu'il l'insère dans l'ouverture 5 du rail de guidage.

Sur la figure 2, le panneau de côté de caisse a été retiré laissant apparaître une pièce de renfort 7 fixée sur le renfort de longeron 9 sous l'ouverture 5. L'ouverture 5 est destinée à recevoir le rail inférieur de guidage de la porte coulissante.

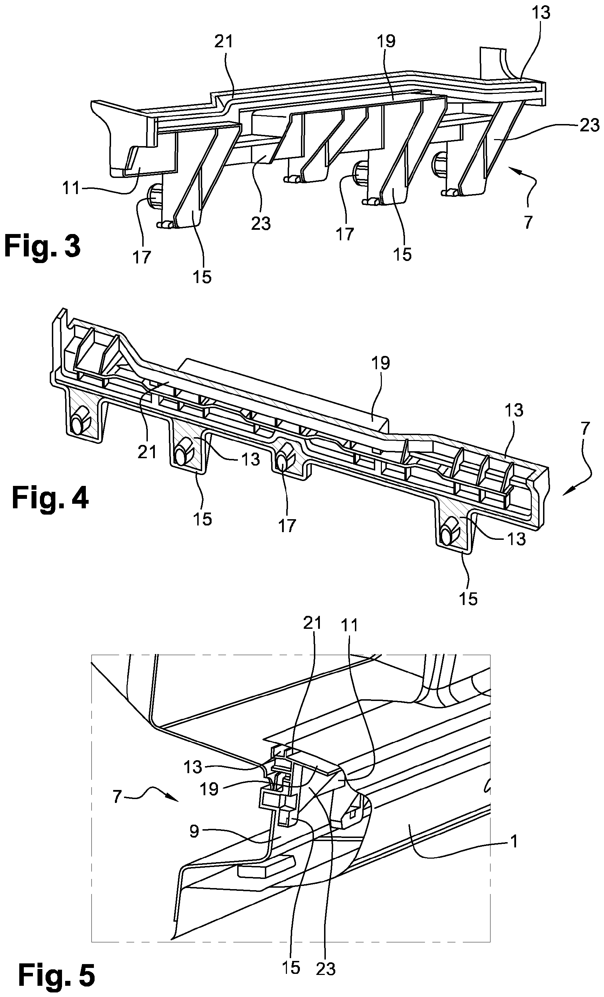

Selon l'invention et ainsi qu'illustré sur les figures 3 et 4, la pièce de renfort 7 comprend une embase 11 présentant un corps et des moyens de fixation (13, 15, 17), l'embase 11 présentant en outre un élément de support 19 relié à l'embase 11 par une de ses extrémités et configuré pour s'étendre depuis ladite embase 11 selon une direction non-parallèle au corps de ladite embase 11. Cette disposition en porte-à-faux permet à l'élément de support 19 de se placer sous le panneau de côté de caisse au niveau de l'ouverture de sorte à pouvoir soutenir une portion de ce panneau, et limiter son enfoncement résultant d'un appui sur la surface supérieure du corps creux. La pièce de renfort 7 est remarquable en ce qu'elle constitue un insert gonflant, de sorte à ce que les moyens de fixation comprennent une mousse expansive 13. L'expression « insert gonflant » désigne une pièce comprenant une base, par exemple en matériau plastique ou en matériau métallique, surmontée d'une mousse expansive 13. En l'espèce, ladite base est formée par la pièce de renfort en elle-même.

De manière générale, les inserts gonflants sont des solutions d'étanchéité, connues en soi, et largement utilisées dans le domaine de la fabrication automobile. Ils sont produits en plaques, découpés à la demande, puis collés sur les bases, ou comme dans le cas présent, collés directement sur l'embase de la pièce de renfort. La pièce de renfort 7 supportant la mousse expansive 13 est montée sur la caisse du véhicule durant le ferrage. Durant la phase de cataphorèse, la mousse expansive 13 gonfle sous l'effet de la chaleur produite par le four.

Comme illustré en figure 3 ou 4, la mouse expansive 13 est agencée pour être disposée :
- sur la face arrière de ladite pièce de renfort 7 destinée à être en regard du renfort de longeron, et le renfort de longeron ; et/ou
- en partie supérieure de ladite pièce de renfort 7 destinée à être en regard du panneau de côté de caisse et ledit panneau de côté de caisse.

Ainsi, la pièce de renfort 7 est reliée par sa mousse expansive 13 au renfort de longeron 9 et/ou au panneau de côté de caisse 1. De préférence, la pièce de renfort 7 est reliée par sa mousse expansive 13 à la fois au renfort de longeron 9 et au panneau de côté de caisse 1.

Selon une variante non représentée de l'invention, il est possible de disposer un joint ou une lèvre d'étanchéité au niveau de la partie supérieure de la pièce d'étanchéité, à condition que ce joint ou cette lèvre d'étanchéité soit réalisé dans un matériau résistant à la chaleur.

Selon un mode de réalisation préféré, au moins une pièce de renfort 7 présente une ou plusieurs zones de mousse expansive 13 agencées pour être en contact à la fois avec le renfort de longeron 9 et avec le panneau de côté de caisse 1. Ainsi, la pièce de renfort 7 peut présenter plusieurs zones de mousse expansive 13. De préférence, la pièce de renfort 7 présente une zone unique de mousse expansive 13 agencée pour être en contact à la fois avec le renfort de longeron 9 et avec le panneau de côté de caisse 1. Il est ainsi rendu possible d'assurer une liaison continue entre la pièce de renfort 7, le renfort de longeron 9 et le panneau de côté de caisse 1.

Ainsi, préférentiellement, l'embase 11 présente une nervure longitudinale supérieure 21 portant de la mousse expansive 13, avantageusement au niveau de son arête supérieure ou sur une des faces latérales de ladite nervure 21, de telle sorte à assurer une liaison avec ledit panneau de côté de caisse. Lorsque la mousse expansive 13 est portée par une des faces latérales de ladite nervure supérieure 21, l'homme du métier choisira avantageusement la face latérale de la nervure en regard du renfort de longeron afin d'assurer une liaison directe entre les trois pièces et éviter ainsi la formation d'un jeu entre le renfort de longeron 9 et le panneau de côté de caisse 1.

Avantageusement, la nervure supérieure longitudinale 21 s'étend selon une direction verticale plus haut que l'élément de support 19. Cette configuration est avantageuse pour faciliter le montage de la pièce de renfort 7, et éviter un frottement éventuel entre ladite pièce de renfort 7 et le panneau de côté de caisse 1, dans sa portion définissant la partie supérieure du corps creux. Par ailleurs, cette configuration permet d'avoir une fixation sur toute la longueur de la pièce de renfort 7 alors que l'élément de support 19 peut présenter une longueur inférieure à la longueur totale de ladite pièce 7.

Selon un mode de réalisation préféré, au moins une pièce de renfort 7 comprend au moins une nervure de rigidification 23 formant une équerre reliant l'embase 11 à l'élément de support 19. La présence de telles nervures de rigidification 23 limite les risques que l'élément de support 19, disposé en porte-à-faux, ne plie sous l'effort, lorsqu'il doit soutenir le poids d'un utilisateur du véhicule.

Selon l'invention, et comme illustré en figure 3, au moins une pièce de renfort 7 comprend au moins une nervure de rigidification 23 formant une équerre reliant l'embase 11 à un support de la nervure longitudinale supérieure 21. Cette configuration dans laquelle la nervure longitudinale supérieure 21 peut être supportée par le corps de l'embase et/ou par un support s'étendant depuis l'embase 11, offre une plus grande liberté géométrique dans la conception de ladite nervure longitudinale supérieure 21 et donc la possibilité de concevoir une nervure longitudinale supérieure 21 non rectiligne, épousant la forme de la zone à soutenir et à étanchéifier. Par ailleurs, la présence d'une telle pièce de renfort 7 augmente la capacité d'absorption des chocs latéraux présentée par le véhicule, contribuant à la protection du longeron en cas de collision, et donc à la réparabilité du véhicule.

La fixation de la pièce de renfort 7 sur le renfort de longeron 9 peut avantageusement être améliorée, en vue d'une tenue à l'effort suffisante, par des moyens de fixation (15, 17) autres que de la mousse expansive 13. Ainsi, de préférence, les moyens de fixation (13, 15, 17) d'au moins une pièce de renfort 7, comprennent au moins une patte de fixation 15 s'étendant depuis l'embase 11. De préférence, au moins une nervure de rigidification 23 est associée à au moins une patte de fixation 15. Cette configuration est avantageuse en ce qu'elle permet de disposer d'une longueur suffisante pour les nervures de rigidification 23 sans pour autant nécessiter un dimensionnement du corps de l'embase 11 en conséquence. Cette configuration est donc économique en matériau utilisé et donc permet d'alléger la pièce de renfort 7.

Comme illustré en figure 4, la mousse expansive 13 peut être disposée sur la face de la ou des pattes de fixation 15 destinée à être placée en regard du renfort de longeron de telle sorte à assurer une liaison avec ledit renfort de longeron sur une plus grande surface.

La pièce de renfort peut être en matériau métallique et peut être vissée ou soudée au renfort de longeron. Dans un tel cas, les pattes de fixation présentent avantageusement des trous pour le passage des vis de fixation. De préférence, la pièce de fixation 7 est fixée sur le renfort de longeron par des clips de fixation 17, avantageusement disposés au niveau des pattes de fixation 15. L'emploi de clips de fixation 17 permet un montage facile et économique de la pièce de renfort 7.

Lesdits clips de fixation 17 peuvent être rapportés sur la ou les pattes de fixation 15. Néanmoins selon une mise en œuvre préférée de l'invention, la pièce de renfort 7 est réalisée en un matériau composite comprenant une matrice thermoplastique ou thermodurcissable et les clips de fixation sont venus de matière avec ladite pièce de renfort. L'embase 11, les pattes de fixation 15, les clips de fixations 17, l'élément de support 19 et les nervures de rigidification 23 sont moulés d'une seule pièce. Ce mode de réalisation offre plusieurs avantages comme celui de diminuer le prix de revient de la pièce de renfort 7, mais également de diminuer sa masse par rapport à une pièce équivalente en métal.

La pièce de renfort 7 peut donc, par exemple, être réalisée en matériau composite thermoplastique ou thermodurcissable. Une mise en œuvre préférée de l'invention privilégiera l'utilisation de matrices thermoplastiques qui présentent des limites au délaminage et à la rupture plus élevées que les résines thermodurcissables.

La fabrication de la pièce de renfort 7 en matériau thermoplastique peut se faire, par exemple, par injection. Elle peut également être réalisée par thermo estampage, comprenant une étape de moulage par compression de pré-imprégnés constitués par la combinaison de renforts et d'une matrice polymère thermoplastique. Il peut également être réalisé selon un procédé de moulage par compression et par transfert. De plus, il est possible de combiner le moulage du dispositif avec au moins une étape de sur-injection de matrice thermoplastique chargée de fibres coupées de la même famille de polymère pour réaliser des décors de renforcement comme par exemple des nervures. Ces différents procédés sont bien connus de l'homme du métier.

Quel que soit le procédé de fabrication choisi, l'homme du métier aura avantage à sélectionner la matrice polymère thermoplastique parmi un ou plusieurs matériaux choisis entre le polypropylène (PP), le polyphtalamide (PPA), le polyétheréthercétone (PEEK), polysulfure de phénylène (PPS), le polyamide-imide (PAI), le polyétherimide (PEI), le polyarylamide (PAA), ou le polyamide (PA) tel que par exemple du polyamide 6 (PA 6 ou polycaprolactame) ou du polyamide 6.6 (PA 6.6 ou polyhexaméthylène adipamide). De préférence, la matrice polymère sera un polyamide (PA).

La fabrication du dispositif en matériau thermodurcissable peut se faire selon les techniques connues de RTM (Resin Transfer Moulding) ou de SMC (Sheet Moulding Compound) par exemple. Les résines utilisées peuvent être sélectionnées parmi les résines polyépoxydes, les résines polyester insaturés, les résines vinylester, les copolymères tels que les résines polyester-vinylester.

De préférence, le matériau composite utilisé (à matrice thermoplastique ou thermodurcissable) comprend un renfort (ou charge) en fibres ou en un mélange de fibres sélectionnées parmi les fibres de verre, de carbone, de céramique, de graphite, naturelles telles que des fibres de lin, de chanvre ou de bambou, de polymères organiques tels que des fibres de polyester. De préférence, les fibres utilisées dans le matériau composite sont des fibres de verre et/ou de carbone.

Eventuellement, la pièce de renfort 7 peut présenter des éléments de renforcement locaux. Par exemple, il comprend des rubans unidirectionnels ou des éléments tubulaires obtenus par pultrusion, pull-winding ou tricotage (braiding). De tels éléments de renforcement à base de fibres continues sous forme de bandes de tissus ou de rubans unidirectionnels peuvent être placés dans le moule pour renforcer la pièce dans les zones de concentration d'efforts, comme par exemp au niveau de l'élément de support 19.

La pièce de renfort 7 peut être symétrique et apte à être montée aussi bien sur le côté latéral droit que le côté latéral gauche du véhicule. Selon un mode de réalisation préféré, la ou les pièces de renfort 7 sont adaptées à l'environnement spécifique de chaque côté du véhicule et au moins une pièce de renfort 7 est asymétrique selon un plan vertical médian et comprend des moyens de détrompage. Par exemple, ladite pièce de renfort 7 comprend au moins deux pattes de fixation 15 et lesdits moyens de détrompage se présentent sous forme d'au moins deux pattes de fixation 15 de longueur différente.

La figure 5 illustre l'agencement de la pièce de renfort 7 telle que disposée dans le corps creux formé par le renfort de longeron 9 et le panneau de côté de caisse 1.

La pièce de renfort 7 peut être symétrique et apte à être montée aussi bien sur le côté latéral droit que le côté latéral gauche du véhicule. Selon un mode de réalisation préféré, la ou les pièces de renfort 7 sont adaptées à l'environnement spécifique de chaque côté du véhicule et au moins une pièce de renfort 7 est asymétrique selon un plan vertical médian et comprend des moyens de détrompage. Par exemple, ladite pièce de renfort 7 comprend au moins deux pattes de fixation 15 et lesdits moyens de détrompage se présentent sous forme d'au moins deux pattes de fixation 15 de longueur différente.

La figure 5 illustre l'agencement de la pièce de renfort 7 telle que disposée dans le corps creux formé par le renfort de longeron 9 et le panneau de côté de caisse 1.

## Revendications

1. Véhicule automobile comprenant un panneau de carrosserie (1) et un élément de structure (9), l'élément de structure (9) et le panneau de carrosserie (1) étant configurés pour former un corps creux montrant une paroi supérieure, ladite paroi supérieure étant formée par une partie recourbée dudit panneau de carrosserie (1), le véhicule comprenant en outre au moins une pièce de renfort (7) fixée sur l'élément de structure (9) dans ledit corps creux, ladite ou lesdites pièces de renfort (7) comprenant une embase (11) présentant un corps, des moyens de fixation (13, 15, 17), et un élément de support (19) configuré pour s'étendre depuis ladite embase sous la paroi supérieure dudit corps creux, et ladite pièce de renfort (7) est un insert gonflant, de sorte à ce que les moyens de fixation (13, 15, 17), comprennent une mousse expansive (13), ledit véhicule comprenant un habitacle, une porte latérale coulissante dotée d'un rail inférieur présentant une portion courbée vers l'intérieur de l'habitacle et une ouverture (5) formant un passage pour ledit rail en direction de l'habitacle, ledit véhicule étant **caractérisé en ce que** l'élément de structure (9) est un renfort de longeron et le panneau de carrosserie (1) est un panneau de côté de caisse, et **en ce que** la paroi supérieure du corps creux est disposée sous l'ouverture (5) destinée à permettre à la portion recourbée d'un rail de guidage inférieur d'une porte coulissante de pénétrer dans l'habitacle.

2. Véhicule selon la revendication 1, **caractérisé en ce que** ladite mousse expansive (13) est agencée pour être disposée entre ladite embase (11) et l'élément de structure (9), et/ou entre ladite embase (11) et le panneau de carrosserie (1).

3. Véhicule selon la revendication 2, **caractérisé en ce que** l'embase (11) présente une nervure longitudinale supérieure (21) s'étendant verticalement ; et **en ce que** de la mousse expansive (13) est portée par l'arête supérieure de ladite nervure (21), de telle sorte à assurer une liaison avec ledit panneau de carrosserie (1).

4. Véhicule selon l'une des revendications 1 à 3, **caractérisé en ce que** les moyens de fixation (13, 15, 17) d'au moins une pièce de renfort (7), comprennent au moins une patte de fixation (15) ; de préférence de la mousse expansive (13) est portée par la face de la ou des pattes de fixation (15) disposées en regard de l'élément de structure (9), de telle sorte à assurer une liaison avec ledit élément de structure (9).

5. Véhicule selon l'une des revendications 1 à 4, **caractérisé en ce que** les moyens de fixation (13, 15, 17) d'au moins une pièce de renfort (7), comprennent au moins un clip de fixation (17) ; de préférence les moyens de fixation (13, 15, 17) de ladite pièce de renfort (7) comprennent au moins une patte de fixation (15) et au moins un clip de fixation (17) est porté par ladite patte de fixation (15).

6. Véhicule selon l'une des revendications 1 à 5, **caractérisé en ce qu'**au moins une pièce de renfort (7) comprend au moins une nervure de rigidification (23) formant une équerre reliant l'embase (11) à l'élément de support (19), de préférence les moyens de fixation comprennent au moins une patte de fixation (15) et au moins une nervure de rigidification (23) est associée à au moins une patte de fixation (15).

7. Véhicule selon l'une des revendications 1 à 6, **caractérisé en ce qu'**au moins une pièce de renfort (7) est asymétrique selon un plan vertical médian et comprend des moyens de détrompage, de préférence ladite pièce de renfort (7) comprend au moins deux pattes de fixation (15) et lesdits moyens de détrompage se présentent sous forme d'au moins deux pattes de fixation (15) de longueur différente.

8. Véhicule selon l'une des revendications 1 à 7, **caractérisé en ce qu'**au moins une pièce de renfort (7) est réalisée en matériau composite et **en ce que** ledit matériau composite comprend une matrice en résine thermoplastique ou en résine thermodurcissable et un renfort en fibres, de préférence le renfort en fibres comprend des fibres de verre et/ou la matrice est sélectionnée dans le groupe comprenant les résines polypropylène, polyamide, polyphtalamide, polyetherethercétone, polysulfure de phénylène, polyamide-imide, polyetherimide, polyarylamide, polyépoxyde, polyester insaturés, vinylester et polyester-vinylester.

## Patentansprüche

1. Kraftfahrzeug mit einer Karosseriebleche (1) und einem Strukturelement (9), wobei das Strukturelement (9) und die Karosseriebleche (1) so konfiguriert sind, dass sie einen Hohlkörper bilden, der eine obere Wand aufweist, wobei die obere Wand durch einen gebogenen Abschnitt der Karosseriebleche (1) gebildet ist, wobei das Fahrzeug ferner mindestens ein Verstärkungsteil (7) aufweist, das an dem Strukturelement (9) in dem Hohlkörper befestigt ist, wobei das mindestens eine Verstärkungsteil (7) einen Sockel (11) mit einem Körper, Befestigungsmittel (13, 15, 17) aufweist, Ein Stützelement (19), das so konfiguriert ist, dass es sich von der Basis unter die obere Wand des Hohlkörpers erstreckt, und das Verstärkungsteil (7) ein aufblasbarer Einsatz ist, sodass die Befestigungsmittel (13, 15, 17) einen expandierenden Schaum (13) umfassen, wobei das Fahrzeug einen Fahrgastraum, eine seitliche Schiebetür mit einer unteren Schiene, die einen zum Inneren des Fahrgastraums gebogenen Abschnitt aufweist, und eine Öffnung (5), die einen Durchgang für die Schiene in Richtung des Fahrgastraums bildet, umfasst, wobei das Fahrzeug **dadurch gekennzeichnet ist, dass** das Strukturelement (9) ein Verstärkungsteil ist Längsträger und Karosserieblech (1) sind kastenseitige Platten, und **dadurch gekennzeichnet, dass** die obere Wand des Hohlkörpers unter der Öffnung (5) angeordnet ist, die dazu bestimmt ist, den gebogenen Abschnitt einer unteren Führungsschiene einer Schiebetür in den Fahrgastraum hineinzuführen.

2. Fahrzeug nach Anspruch 1, **dadurch gekennzeichnet, dass** der expandierende Schaum (13) so angeordnet ist, dass er zwischen dem Sockel (11) und dem Strukturelement (9) und/oder zwischen dem Sockel (11) und der Karosserieplatte (1) angeordnet ist.

3. Fahrzeug nach Anspruch 2, **dadurch gekennzeichnet, dass** der Sockel (11) eine obere, sich vertikal erstreckende Längsrippe (21) aufweist; und dass expandierender Schaum (13) von der Oberkante der Rippe (21) getragen wird, sodass eine Verbindung mit der Karosserieblende (1) gewährleistet ist.

4. Fahrzeug nach einem der Ansprüche 1 bis 3, **dadurch gekennzeichnet, dass** die Befestigungsmittel (13, 15, 17) des mindestens einen Verstärkungsteils (7) mindestens eine Befestigungslasche (15) umfassen; vorzugsweise ist expandierender Schaum (13) von der Seite des oder der Befestigungslaschen (15) getragen, die gegenüber dem Strukturelement (9) angeordnet sind, sodass eine Verbindung mit dem Strukturelement (9) gewährleistet ist.

5. Fahrzeug nach einem der Ansprüche 1 bis 4, **dadurch gekennzeichnet, dass** die Befestigungsmittel (13, 15, 17) mindestens eines Verstärkungsteils (7) mindestens einen Befestigungsclip (17) umfassen; vorzugsweise die Befestigungsmittel (13, 15, 17) des Verstärkungsteils (7) mindestens einen Befestigungslappen (15) umfassen und mindestens ein Befestigungsclip (17) von dem Befestigungslappen (15) getragen wird.

6. Fahrzeug nach einem der Ansprüche 1 bis 5, **dadurch gekennzeichnet, dass** mindestens ein Verstärkungsteil (7) mindestens eine Versteifungsrippe (23) umfasst, die einen Winkel bildet, der den Sockel (11) mit dem Trägerelement (19) verbindet, wobei vorzugsweise die Befestigungsmittel mindestens eine Befestigungslasche (15) umfassen und mindestens eine Versteifungsrippe (23) mindestens einer Befestigungslasche (15) zugeordnet ist.

7. Fahrzeug nach einem der Ansprüche 1 bis 6, **dadurch gekennzeichnet, dass** mindestens ein Verstärkungsteil (7) in einer vertikalen Mittelebene asymmetrisch ist und eine Einrichtung zum Enttäuschen aufweist, wobei vorzugsweise das Verstärkungsteil (7) mindestens zwei Befestigungslaschen (15) aufweist und die Einrichtung zum Enttäuschen in Form von mindestens zwei Befestigungslaschen (15) unterschiedlicher Länge ausgebildet ist.

8. Fahrzeug nach einem der Ansprüche 1 bis 7, **dadurch gekennzeichnet, dass** mindestens ein Verstärkungsteil (7) aus einem Verbundwerkstoff hergestellt ist und dass der Verbundwerkstoff eine Matrix aus thermoplastischem Harz oder duroplastischem Harz und eine Faserverstärkung umfasst, wobei vorzugsweise die Faserverstärkung Glasfasern umfasst und/oder die Matrix aus der Gruppe ausgewählt ist, die Polypropylen-, Polyamid-, Polyphthalamid-, Polyetheretherketon-, Polyphenylensulfid-, Polyamidimid-, Polyetherimid-, Polyarylamid-, Polyepoxid-, ungesättigte Polyester-, Vinylester- und Polyesterharze umfasst Vinylester.

## Claims

1. A motor vehicle comprising a body panel (1) and a structural element (9), the structural element (9) and the body panel (1) being configured to form a hollow body showing an upper wall, said upper wall being formed by a curved part of said body panel (1), the vehicle further comprising at least one reinforcing piece (7) fixed to the structural element (9) in said hollow body, said reinforcing piece(s) (7) comprising a base (11) having a body, fixing means (13, 15, 17), and a support element (19) configured to extend from said base under the upper wall of said hollow body, and said reinforcement piece (7) is an inflating insert, so that the fixing means (13, 15, 17) comprise an expansive foam (13), said vehicle comprising a passenger compartment, a sliding side door provided with a lower rail having a portion curved towards the interior of the passenger compartment and an opening (5) forming a passage for said rail in the direction of the passenger compartment, said vehicle being **characterized in that** the structural element (9) is a side rail reinforcement and the side rail panel the body (1) is a body side panel, and the upper wall of the hollow body is arranged under the opening (5) for allowing the curved portion of a lower guide rail of a sliding door to enter the passenger compartment.

2. Vehicle according to claim 1, **characterized in that** said expansive foam (13) is arranged to be disposed between said base (11) and the structural element (9), and/or between said base (11) and the bodywork panel (1).

3. Vehicle according to claim 2, **characterized in that** the base (11) has an upper longitudinal rib (21) extending vertically; and **in that** expansive foam (13) is carried by the upper edge of said rib (21), so as to ensure a connection with said bodywork panel (1).

4. Vehicle according to one of claims 1 to 3, **characterized in that** the means (13, 15, 17) for fixing at least one reinforcing piece (7) comprise at least one fixing lug (15); preferably, expansive foam (13) is carried by the face of the fixing lug or lugs (15) arranged opposite the structural element (9), so as to ensure a connection with the said structural element (9).

5. Vehicle according to one of claims 1 to 4, **characterized in that** the means (13, 15, 17) for fixing at least one reinforcing piece (7) comprise at least one fixing clip (17); preferably the means (13, 15, 17) for fixing said reinforcing piece (7) comprise at least one fixing lug (15) and at least one fixing clip (17) is carried by said fixing lug (15).

6. Vehicle according to one of claims 1 to 5, **characterized in that** at least one reinforcing piece (7) comprises at least one stiffening rib (23) forming a bracket connecting the base (11) to the support element (19), preferably the fixing means comprise at least one fixing lug (15) and at least one stiffening rib (23) is associated with at least one fixing lug (15).

7. Vehicle according to one of claims 1 to 6, **characterized in that** at least one reinforcement piece (7) is asymmetrical in a median vertical plane and comprises polarizing means, preferably the said reinforcement piece (7) comprises at least two fixing lugs (15) and the said polarizing means are in the form of at least two fixing lugs (15) of different lengths.

8. A vehicle according to any one of claims 1 to 7, **characterized in that** at least one reinforcing piece (7) is made of composite material and **in that** said composite material comprises a matrix of thermoplastic resin or of thermosetting resin and a fiber reinforcement, preferably the fiber reinforcement comprises glass fibers and/or the matrix is selected from the group comprising polypropylene, polyamide, polyphthalamide, polyetheretherketone, polyphenylene sulfide, polyamide-imide, polyetherimide, polyarylamide, polyepoxide, unsaturated polyester, vinylester and polyester-vinyl ester resins.
